# EUROPEAN PATENT SPECIFICATION

(11) **EP 2 848 802 B1**
(45) Date of publication and mention of the grant of the patent: **08.06.2016**
(21) Application number: 13425123.0
(22) Date of filing: 13.09.2013
(51) Int. Cl.: F03B 13/14, F03B 13/10, F03B 13/22

(54) **System for obtaining electrical energy from a wave motion**
System zur Erzeugung von elektrischer Energie aus Wellenbewegung
Système pour la production d'énergie électrique à partir d'un mouvement de vagues

(43) Date of publication of application: 18.03.2015
(73) Proprietor: Ricerca Sul Sistema Energetico - RSE S.p.A., 20134 Milano (IT)
(72) Inventor: Peviani, Maximo Aurelio, 20134 Milano (IT)
(74) Representative: Ferraiolo, Ruggero

(56) References cited:
- WO-A1-2009/009733
- JP-A- S5 770 959
- US-A- 5 770 893
- US-A1- 2009 211 241
- US-B1- 6 768 216

## Description

### Field of the invention.

The invention is' in the field of systems that draw electricity from the energy of the wave motion, in particular from the sea wave movement.

### State of the art.

There are known several systems in this field of technology and, among many, some of those who have shown significant ability to achieve their purpose are cited here below.

Document US 5 770 893 A discloses a system where a pipe includes means suitable for transforming energy captured from a wave motion into electrical energy, said means being a hydraulic turbine associated with an electric generator and the pipe extending at its bottom as a water inlet capable to capture the water wave and being associated with buoy means that impart to the pipe an ascending and descending movement to keep the hydraulic turbine below the minimum level of the wave motion. In particular, the pipe being in a fixed position and not moving with the wave motion (contrary to the system in D1) leads to a better exploitation of pressure and velocity variations along the wave length, which is translated into a larger volume of water entering the pipe and passing through the hydraulic turbine, maximizing the electric energy production..

The system known as "LIMPET" (Land Installed Marine Power Energy Transmitter) developed by VH Wavegen, is of the type OWC (Oscillating Water Column), built on Islay Island, in collaboration with the Queens University of Belfast. It was designed as a concrete structure built into the rock of a cliff at a depth of 10 meters, it was designed for an output of 75 kW using a Wells turbine and an electric induction generator. A concrete oblique pipe has been designed, preferred to a vertical one, both to limit turbulence and energy loss of the liquid stream, and because, for a given section of the pipe, it allows to increase the flat surface of the water column in the pipe. The energy produced with the "LIMPET" is connected to an electricity distribution network

The system known as "REWEC" (Resonant Wave Energy Converter) is designed to be integrated into breakwaters and harbour defence structures. WAVENERGY.IT is a company founded in 2010 as a spin-off of the Mediterranean University of Reggio Calabria (Italy) who designed the system with the aim of developping a device for the production of energy from the waves of the type Oscillating Water Column. The distinguishing feature of "REWEC" is the input opening in the air chamber, which opening is divided into a double barrier, designed to maximize the oscillation of the surface level of the water. After a series of tests in scale, devices scale prototypes were installed near Calabrian side of the Strait of Messina. Such systems are currently in the design phase to be integrated into the breakwall of the ports of Civitavecchia and Genoa.

The device known as "Seawave - Slot-Cone Generator" (SSG) - is of the overtopping type developped by the Norwegian company WAVEnergy. This technology has been designed to operate at the same time as breakwaters in coastal areas as energy converter. The basic principle of the SSG is the classic "overtopping" in which it is used the difference in gravitational potential energy between the highest part (ridge) and lowest part (wave hollow) of the wave. The structure consists of a ramp for the ascent of the waves in which, at different heights, cracks open for the entrance of the waves that reach inner tanks placed at different levels with respect to the free surface of the water. The stored water is allowed to flow through turbines during the passage of the subsequent wave hollows. In 2005, a program started for testing the Seawave Slotcone Generator in real scale. The project is taking place in Kvitsøy, Norway, in collaboration with NTNU (Norwegian University of Science and Technology), which provides technical assistance.

With the system known as "OCEAN NAVITAS" a converter is under development to be installed on coastal defence works such as breakwaters and bulwark.This system, also known as "Aegir Dynamo", in addition to the shoreline solution, can be designed to be installed nearshore or offshore, given that it is capable of absorbing energy from all directions of origin of the wave with a "point adsorber". Aegir Dynamo comprises a fixed and emerged structure in which electrical components are housed and a floating buoy free to perform vertical movements following the wave motion. The oscillations of the buoy impart a rotational movement to a generator, within which a fixed magnet is positioned that produces electricity.

This system is able to start generating energy with waves of 30 cm, with an optimum yield of 45 kW with waves of 1.5 meters for each single module.

### Disadvantages of the state of the art.

In D1, the control that the buoy means exerts on the pipe oscillation is not suitable for tackling violent storms potentially harmful for the system.

LIMPET and REWEC and have in common the following disadvantages.

Loss of energy generation: both devices use a two direction turbine localized in the gas phase, i.e. in the air chamber of the device.This fact entails a loss of the available energy for the electricity generation, which energy is consumed in losses due to friction, turbulence, compressibility, etc. in addition to lower kinetic energy exploitable per unit volume of fluid, associated with the ratio of spe
cific mass air/water.

High cost of implementation: the installation of these systems requires the construction of civil coastal works, large concrete caissons with a high associated cost.

Reduced constructive flexibility: these systems have a reduced flexibility of construction, for example, can not be used in existing facilities (moles of ports, docks, barriers, breakwaters, etc...) that could cause reduction of implementation cost, and then always require an "ad hoc" construction.

SEAWAGE Loss of energy generation: the potential energy of the wave is used, only in the descending phase of the water, with a considerable loss of the available energy for electricity generation, due both to the wave reflection and to the loss in the water ascent along the structure (due friction, turbulence, entry into the tanks, etc..). High cost of implementation: the installation of this device requires the construction of large civil coastal works, with high associated costs. Reduced flexibility of construction: the system has a reduced flexibility in construction, for example, SEAWAVE can not be used in existing structures (piers ports, benches, barriers, breakwaters, etc...) that could reduce the cost of implementation, then always requiring an "ad hoc"construction.

OCEAN NAVITAS - Loss of energy generation: the system uses a floating buoy which performs vertical movements; it is therefore necessary to use a mechanism for transforming the rotating movement of the generator, with consequent loss of generation energy.

### Scope of the invention.

The scope of the invented system is to generate electricity by transforming the energy available in the sea wave movement by means of a work installed in typical Mediterranean coastal structures, such as docks harbours, docks, fences and breakwaters. The system particularly fits the characteristics of the waves of the Mediterranean Sea, but can be adopted in marine areas that present affinity with the Mediterranean.

### Background of the invention.

The idea of solution of the technical problem is to provide a known system conveying the sea water in wave motion within a vertical or sub vertical pipe (in the following, for simplicity, only vertical pipe will be referred to) with at least a displacement device adapted to control the ascending and descending movements of the pipe and consequently the submergence of the hydraulic turbine taken into the pipe and also to impart to the pipe a rotational movement around its vertial axis suitable to place the pipe water inlet in the direction facing the arrival wave. Preferably, the pipe comprises a narrow section suitable to create the optimum hydrodynamic conditions of pressure and speed of the water flow, such that said means, a hydraulic turbine connected with a generator of electricity, operate efficiently.

The hydraulic turbine provided in the system is preferably of the bi-directional type that allows rotation of the rotor in the same direction, regardless of the direction of water flow within the pipe, ascending or descending.

The hydrodynamic design of the pipe is such as to minimize the losses due to friction and turbulence and to use the maximum possible energy of the wave motion.

### Advantages of the invention.

The displacement device controlling the pipe vertical and rotational movements affords the maximum efficiency in such kind of electrical energy production.

### Example of Embodiment

The invention will now be illustrated with a non-limiting example of embodiment and the help of the diagrammatic drawings, in which
- Fig 1 is a diagram of the system,
- Fig.2 is a first elevation view,
- Fig 3 is a second elevation view,
- Fig 4 is a third elevation view and
- Fig 5 is an overall view of a system.

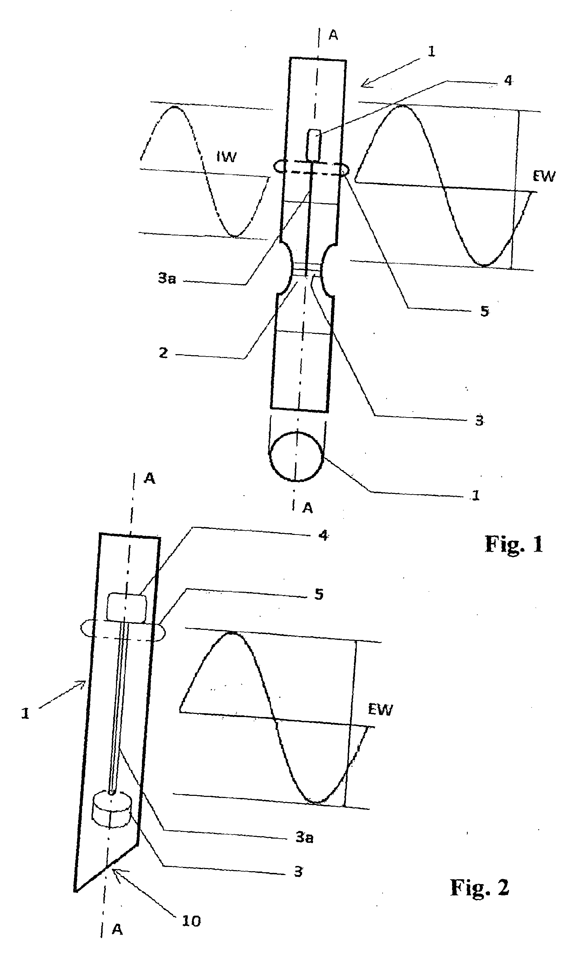

Figure 1 is a diagram that explains the idea of solution of the technical problem solved by the invention according to the intended purpose. It shows a diagram of the system in which a bi-directional hydraulic turbine 3 is positioned in a narrow section 2 of a circular pipe 1 and is provided with a shaft 3a that transmits rotary motion to an electrical power generator 4. A displacement device 5 is suitable for moving the pipe up or down according to the wave alternating motion EW outside the pipe 1, while IW conventionally shows the alternating motion of water within the pipe 1.

Figure 2 shows a first embodiment of the invention wherein the system comprises a circular metallic pipe I of internal diameter Ø = 1500 mm and total length L = 7000 mm, with a cut slant lower end for defining a water inlet 10, within the pipe being comprised the system <hydraulic turbine 3 - transmission shaft 3a -electric generator 4> to convert the hydraulic energy into electrical energy. The system includes the displacement device 5 that allows movement ascending / descending of the pipe so that the type Wells hydraulic turbine 3 will always be below the minimum level of outer wave motion EW. The displacement device 5 can be realized, for example, by a system <electric motor - helical gear - worn screw - rack fixed to the pipe 1.

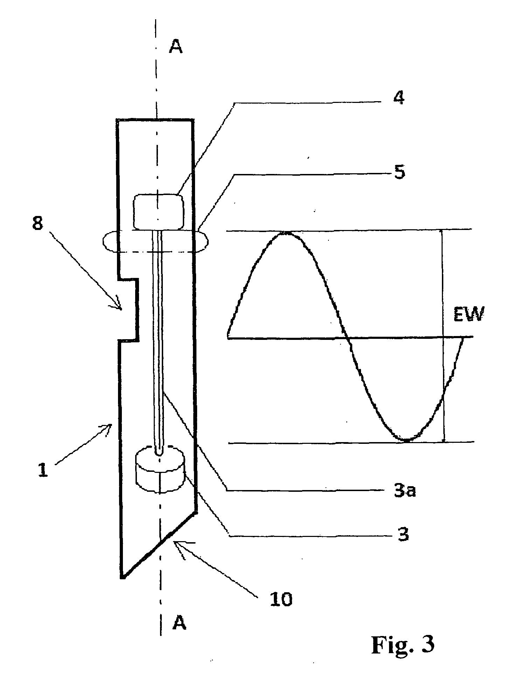

Figure 3 shows a second embodiment of the invention similar to that illustrated in Fig.2, but with the addition of an open section 8, opposite to the water inlet 10, which allows water to exit from the pipe 1. This solution, despite it works only in the ascending phase of the wave, may be more attractive from the point of view of the efficiency in generating energy due to the decrease of the hydraulic load within the pipe. Moreover, this solution would allow the possible use of uni-directional hydraulic turbines that have an efficiency greater than those bi-directional.

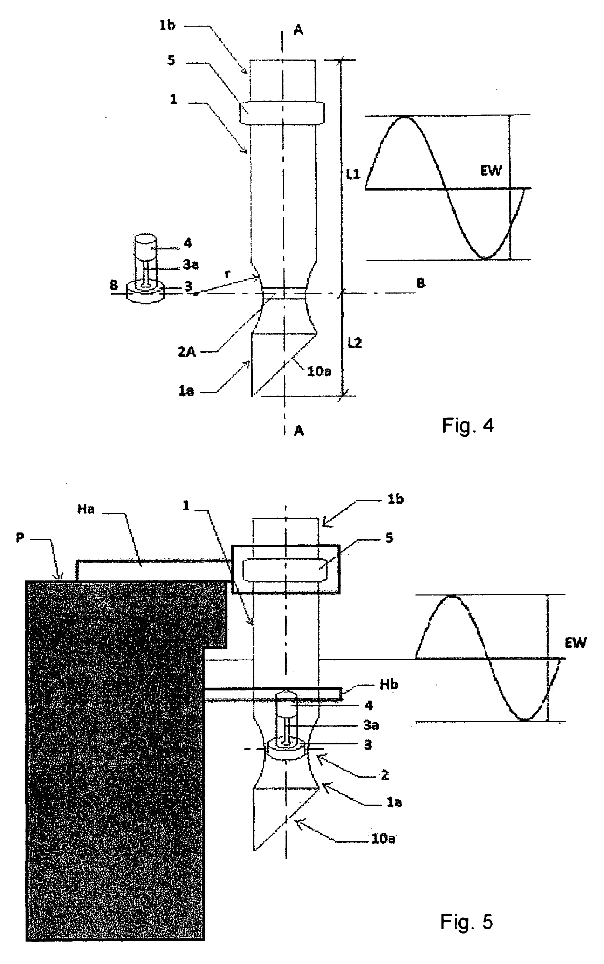

Figure 4 shows a system suitable for an installation along a coast that, like many coasts of the Tyrrhenian Sea, is characterized by a wave with medium wave ranging between about 1.5 and 2 m and maximum generation wave of about 4 m. In this system, the turbine is of Wells type' coupled with a turbo-generator built by Voith Hydro Wavegen' which has a rated power of about 140 kW and is capable of producing annual energy equal to about 16 MWh / year (based on an actual time of generation equal to 2100 hours per year). In this system the pipe I comprises a first upper circular element 1 b of internal diameter Ø = 1500 mm and length L1 = 5000 mm integral with a second lower water inlet element 1a of length L2 = 2000 mm. A gradual narrowing of the junction sections between the upper element and the lower element allows to generate the said narrow section 2A of circular inner diameter Ø = 1000 mm wherein the hydraulic turbine 3 is positioned. The hydraulic turbine 3, the transmission shaft 3a and the electric generator 4 are shown for clarity all three outside of the pipe 1. The displacement device 5 associated with the pipe 1 allows to move it vertically so as to control the submergence (i.e. to control the depth of the turbine according to height of the outer wave motion - see line B-B, level of the hydraulic turbine below the minimum level of the wave EW), in addition to possibly allow to rotate the water inlet 10a in the direction of origin of the wave motion.

Figure 5 shows a pipe 1 with its first upper element 1b franked with sealing means Ha and Hb at the end of a maritime pier P; 1a is the second intake lower element with its water inlet 10a; 2 is the narrow section in which the bi-directional hydraulic turbine 3 is placed, 3a is the transmission shaft, 4 is the electric generator and 5 the displacement device suitable to move the pipe upwards or downwards. It can be seen that the hydraulic turbine 3 is below the minimum level of the outer wave motion EW.

## Claims

1. System for obtaining electrical energy from a wave motion in which a pipe (1) comprises means (3) suitable for transforming the energy of the captured wave motion into electrical energy, the pipe (1) taking inside a hydraulic turbine (3) and an electric generator (4) connected to each other to generate electricity and extends at its bottom as a water inlet (10a) adapted to capture the water wave, **characterized in that** a displacement device (5) is comprised for imparting an ascending and descending movement to the pipe (1) submerged in the water in wave motion suitable for keeping the hydraulic turbine (3) below the minimum level of the outer wave motion (EW) and for imparting to the pipe (1) a movement of rotation around its vertical axis (A-A) suitable for placing the water inlet (10, 10a) in the direction facing the arriving waves.

2. System according to claim 1 **characterized in that** the hydraulic turbine (3) is a bi-directional turbine that allows the rotation of the rotor in the same direction, regardless of the direction of the water flow within the pipe, ascending or descending

3. System according to claims 1 and 2 **characterized in that** the pipe (1) comprises a narrow section (2A) in which the hydraulic turbine (3) is placed to optimize the flow characteristics and the efficiency of the energy generation.

4. System according to claim 3 **characterized in that** the internal diameter of the narrow section (2A) ranges from 0.4 to 0.8 times the internal diameter of the pipe (1).

5. System according to claims 1-4 suitable for being installed along a coast where the wave motion is **characterized by** medium wave between about 1.5 and 2 m and a peak wave of energy generation of about 4 m, **characterized in that** a first upper element (1b) has an internal diameter Ø equal to about 1500 mm and a length (L1) of about 5.000 mm and is integral with a second intake element (1a) of length (L2) of about 2.000 mm whose terminal section defines an elliptical water inlet (10a) of internal vertical diameter Ø₁ equal to about 2.120 mm and horizontal internal diameter Ø₂ of about 1.500 mm.

6. System according to claim 5 **characterized in that** the pipe (1) has the inner diameter equal to about 1.500 mm and the total length (L) equal to about 7.000 mm and has the cut slant lower end for defining a water inlet (10).

7. System according to claim 1 **characterized in that** the hydraulic turbine (3) is unidirectional.

8. System according to claims 1 and 7, **characterized in that** the pipe (1) is provided with an open section (8) opposite the water inlet (10).

## Patentansprüche

1. System zur Gewinnung elektrischer Energie aus einer Wellenbewegung, bei dem ein Rohr (1) Mittel (3) aufweist, die geeignet sind, die Energie einer eingefangenen Wellenbewegung in elektrische Energie zu wandeln, wobei das Rohr (1) innen eine hydraulische Turbine (3) und einen elektrischen Generator (4) aufweist, die miteinander verbunden sind, um Elektrizität zu erzeugen, und sich an seinem Boden als ein Wassereinlass (10a) erstreckt, der ausgebildet ist, um die Wasserwelle einzufangen, **dadurch gekennzeichnet, dass** eine Verlagerungsvorrichtung (5) vorgesehen ist zur Vermittlung einer aufsteigenden und absteigenden Bewegung an das Rohr (1), das in das Wasser mit Wellenbewegung eingetaucht ist, die geeignet ist, die hydraulische Turbine (3) unterhalb des Minimalpegels der äußeren Wellenbewegung (EW) zu halten und dem Rohr (1) eine Drehbewegung um seine Vertikalachse (A-A) zu vermitteln, die geeignet ist, den Wassereinlass (10, 10a) in der Richtung zu den ankommenden Wellen zu platzieren.

2. System nach Anspruch 1, **dadurch gekennzeichnet, dass** die hydraulische Turbine (3) eine bidirektionale Turbine ist, die die Drehung des Rotors in derselben Richtung erlaubt, unabhängig von dem Wasserfluss innerhalb des Rohrs, ansteigend oder absteigend.

3. System Anspruch 1 und 2, **dadurch gekennzeichnet, dass** das Rohr (1) einen schmalen Abschnitt (2A) aufweist, in dem die hydraulische Turbine (3) platziert ist, um die Flusseigenschaften und die Effizienz der Energiegewinnung zu optimieren.

4. System nach Anspruch 3, **dadurch gekennzeichnet, dass** der Innendurchmesser des schmalen Abschnitts (2A) im Bereich des 0,4 bis 0,8-fachen des Innendurchmesser des Rohrs (1) liegt.

5. System nach Anspruch 1-4, das geeignet ist, entlang einer Küste installiert zu werden, wobei die Wellenbewegung durch eine mittlere Welle zwischen etwa 1,5 und 2 m und eine Spitzenwelle für die Energiegewinnung von etwa 4 m **gekennzeichnet ist, dadurch** gekennzeichnet, dass ein erstes oberes Element (1b) einen Innendurchmesser 0 aufweist, der etwa gleich 1500 mm beträgt, und eine Länge (L1) von etwa 5000 mm und integral ist mit einem zweiten Einlasselement (1a) mit einer Länge (L2) von etwa 2000 mm, dessen Endabschnitt einen elliptischen Wassereinlass (10a) mit einem inneren vertikalen Durchmesser Ø₁ von etwa gleiche 2120 mm und einem horizontalen Innendurchmesser Ø₂ von etwa 1500 mm definiert.

6. System nach Anspruch 5, **dadurch gekennzeichnet, dass** das Rohr (1) einen Innendurchmesser von etwa gleich 1500 mm und eine Gesamtlänge (L) von etwa gleich 7000 mm aufweist und ein abgeschnittenes schräges unteres Ende zur Definition eines Wassereinlasses (10) aufweist.

7. System Anspruch 1, **dadurch gekennzeichnet, dass** die hydraulische Turbine (3) unidirektional ist.

8. System nach Anspruch 1 und 7, **dadurch gekennzeichnet, dass** das Rohr (1) mit einem offenen Abschnitt (8) gegenüber dem Wassereinlass (10) versehen ist.

## Revendications

1. Système d'obtention d'énergie électrique à partir du mouvement ondulatoire de vagues dans lequel un tube (1) comprend des moyens (3) susceptibles de transformer l'énergie du mouvement ondulatoire capté de vagues en énergie électrique, ce tube (1) ayant à sa partie interne une turbine hydraulique (3) et un générateur électrique (4) qui sont reliés pour générer de l'électricité, et s'étendant à son extrémité inférieure sous la forme d'une entrée d'eau (10a) susceptible de capter l'ondulation des vagues,
**caractérisé en ce qu'**
il comporte un dispositif de déplacement (5) permettant d'impartir un mouvement ascendant et descendant au tube (1) submergé dans l'eau en mouvement ondulatoire susceptible de maintenir la turbine hydraulique (3) au-dessous du niveau minimum du mouvement ondulatoire externe des vagues (EW), et d'impartir au tube (1) un mouvement de rotation autour de son axe vertical (A-A) susceptible de positionner l'entrée d'eau (10, 10a) dans la direction faisant face aux vagues entrantes.

2. Système conforme à la revendication 1,
**caractérisé en ce que**
la turbine hydraulique (3) est une turbine bidirectionnelle qui permet la rotation du rotor dans la même direction quelque soit la direction du flux d'eau à la partie interne du tube, qu'il soit ascendant ou descendant.

3. Système conforme aux revendications 1 et 2,
**caractérisé en ce que**
le tube (1) a une section étranglée (2A) dans laquelle la turbine hydraulique (3) est montée pour optimiser les caractéristiques de l'écoulement et l'efficacité de la génération d'énergie.

4. Système conforme à la revendication 3,
**caractérisé en ce que**
le diamètre interne de la section étranglée (2A) est situé dans la plage de 0.4 à 0.8 fois le diamètre interne du tube (1).

5. Système conforme aux revendications 1 à 4,
destiné à être monté le long d'une côte où le mouvement ondulatoire des vagues se distingue par une onde moyenne de 1,5 à 2 m et un pic d'ondes de génération d'énergie d'environ 4 m,
**caractérisé en ce qu'**
un premier élément supérieur (1b) a un diamètre interne 0 d'environ près 1500 mm et une longueur (L1) d'environ 5.000 mm et est intégré à un second élément d'entrée (1a) ayant une longueur (L2) d'environ 2.000 mm dont la section d'extrémité définit une entrée d'eau elliptique (10a) ayant un diamètre vertical interne Ø₁ d'environ 2.120 mm et un diamètre horizontal interne Ø₂ d'environ 1.500 mm.

6. Système conforme à la revendication 5,
**caractérisé en ce que**
le tube (1) a un diamètre interne d'environ 1.500 mm une longueur totale (L) d'environ 7.000 mm, et à une extrémité inférieure coupée obliquement pour définir l'entrée d'eau (10).

7. Système conforme à la revendication 1,
**caractérisé en ce que**
la turbine hydraulique (3) est une turbine unidirectionnelle.

8. Système conforme aux revendications 1 et 7,
**caractérisé en ce que**
le tube (1) a une section ouverte (8) opposée à l'entrée d'eau (10).
